(19) Europäisches Patentamt
European Patent Office
Office européen des brevets

(11) **EP 4 528 895 A1**

(12) **EUROPEAN PATENT APPLICATION**

(43) Date of publication:
**26.03.2025 Bulletin 2025/13**

(21) Application number: **24186321.6**

(22) Date of filing: **03.07.2024**

(51) International Patent Classification (IPC):
***H01M 50/207*** (2021.01)    ***H01M 50/209*** (2021.01)
***H01M 50/211*** (2021.01)    ***H01M 50/249*** (2021.01)
***H01M 50/26*** (2021.01)    ***H01M 50/291*** (2021.01)
***H01M 50/35*** (2021.01)

(52) Cooperative Patent Classification (CPC):
**H01M 50/209; H01M 10/0481; H01M 10/613;
H01M 10/625; H01M 10/656; H01M 50/207;
H01M 50/211; H01M 50/249; H01M 50/26;
H01M 50/264; H01M 50/271; H01M 50/289;
H01M 50/291; H01M 50/35; H01M 50/394;** (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.07.2023 KR 20230094896**

(71) Applicant: **SAMSUNG SDI CO., LTD.
Giheung-gu
Yongin-si, Gyeonggi-do
17084 (KR)**

(72) Inventors:
• **JEON, Jeehoon**
  **17084 Yongin-si (KR)**
• **MOON, Soodeok**
  **17084 Yongin-si (KR)**
• **WOO, Beomjun**
  **17084 Yongin-si (KR)**
• **KIM, Gangyul**
  **17084 Yongin-si (KR)**
• **JEON, Sunghyun**
  **17084 Yongin-si (KR)**
• **JI, Taeho**
  **17084 Yongin-si (KR)**

(74) Representative: **Marks & Clerk LLP
15 Fetter Lane
London EC4A 1BW (GB)**

(54) **RECHARGEABLE BATTERY PACK**

(57)    A rechargeable battery pack that maximizes pack energy density by stacking battery cells. A rechargeable battery pack includes a center frame having a first bottom and a first side wall and supporting the cell stack, a first side frame and a second side frame having a second bottom and a second side wall and coupled to the center frame in a second direction crossing the first direction and supporting a cell narrow side of the cell stack, and a first end frame and a second end frame coupled to both ends of the center frame, the first side frame, and the second side frame in the first direction to support a cell wide side of the cell stack.

FIG. 2

**EP 4 528 895 A1**

(52) Cooperative Patent Classification (CPC): (Cont.)
    B60L 50/60; H01M 2220/20; Y02E 60/10

**Description**

BACKGROUND

(a) Field

The present disclosure relates to a rechargeable battery pack.

(b) Description of the Related Art

Unlike primary batteries, rechargeable batteries are batteries that repeatedly charge and discharge. Small-capacity rechargeable batteries are used in small, portable electronic devices such as mobile phones, laptop computers, and camcorders. High-capacity and high-density secondary batteries are used as power sources for driving motors in hybrid and electric vehicles or for energy storage.

A rechargeable battery module may include a plurality of battery cells connected in series and/or parallel to drive a motor of, for example, a hybrid vehicle that requires relatively high energy density. For example, a rechargeable battery module may be formed by stacking a plurality of battery cells in a frame and the number of battery cells may depend on a desired amount of power of the rechargeable battery module (e.g., for an electric vehicle).

Such rechargeable battery modules are connected in series and/or parallel within a housing manufactured using various methods to form a rechargeable battery pack. Therefore, various types of rechargeable battery modules are being manufactured to suit the capacity of the rechargeable battery pack.

However, in terms of energy capacity, packs with rechargeable battery modules have limitations. Therefore, in order to maximize the energy of the rechargeable battery pack, it is desirable to manufacture a rechargeable battery pack that directly assembles the battery cells without a rechargeable battery module.

The above information disclosed in this Background section is for enhancement of understanding of the background of the present disclosure, and therefore, it may contain information that does not constitute prior art.

SUMMARY

Embodiments of the present disclosure relates to a rechargeable battery pack that maximizes or at least increases pack energy density by stacking battery cells.

A rechargeable battery pack according to embodiments of the present disclosure includes a center frame supporting the cell stack with a first bottom and a first side wall, a first side frame and a second side frame coupled to the center frame in a second direction crossing the first direction and having a second bottom and a second side wall to support a cell narrow side of the cell stack, and a first end frame and a second end frame coupled to both ends of the center frame, the first side frame, and the second side frame in the first direction to support a cell wide side of the cell stack.

The rechargeable battery pack according to embodiments of the present disclosure may further include a cross center frame coupled to the center frame, the first side frame, and the second side frame in the middle of the first direction to support the cell wide sides of the different cell stacks on both sides of the first direction.

The center frame, the first side frame, and the second side frame may correspond to various sizes of the cell stack depending on the length in the first direction.

The cell stack may include insulating members provided at both ends of the first direction, and a pressurizing body disposed outside the insulating member at at least one side of both ends in the first direction.

The pressurizing body may include a first plane portion disposed on the cell stack side, a second plane portion formed integrally with the first plane portion to form a gap, and a compressing force generator supported on the end frame by screwing the second plane portion and causing the first plane portion to press the cell stack.

The first plane portion is formed with an area corresponding to the cell wide side of the cell stack, the second plane portion is formed to have a smaller area than the first plane portion, and the pressurizing body may further include an inclined surface portion connecting the first plane portion and the second plane portion in a direction inclined to the first direction.

The pressurizing body may further include a rib connecting the first plane portion and the second plane portion in the first direction.

The first plane portion and the second plane portion may have a partially cut recess portion at a portion where the electrode terminals of the battery cell are disposed.

The first flat part may have a first vent hole, and the second plane portion may have second vent holes penetrating on both sides of the compressing force generator and connected to the first vent hole.

The rechargeable battery pack may further include a pack cover mounted on the first side frame, the second side frame, and the first end frame and the second end frame, wherein at least one of the first end frame and the second end frame has a pack vent connected to the second vent hole.

The first side frame and the second side frame may have an adhesive injection port provided at the top of the third direction, an inclined portion connected to the adhesive injection port and inclined inward in the second direction, and an inductive gap portion connected to the inclined portion to form a gap that guides adhesive to the cell narrow side and a cell bottom of the battery cell. The inductive gap may be filled with an adhesive.

The rechargeable battery pack of embodiments of the present disclosure may be provided between the second side wall and the cell stack and may further include insulation having a length (L) and a height (H) on the side and bottom surfaces of the cell stack.

The first side frame and the second side frame may have the adhesive injection port, the inclined portion, and the inductive gap portion on at least one side in the second direction.

The center frame may include an adhesive injection port provided at the top of the third direction, a first inclined portion and a second inclined portion connected to the adhesive injection port and inclined respectively inward and outward in the second direction, and a first inductive gap portion and a second inductive gap portion respectively connected to the first inclined portion and the second inclined portion and respectively induce the adhesive to the cell narrow side of the battery cell disposed on both sides in the second direction. The first inductive gap portion and the second inductive gap portion may be filled with an adhesive.

The rechargeable battery pack according to embodiments of the present disclosure may be provided between the inner side of the side wall in the second direction and the cell stack and between the outer side of the side wall in the second direction and the cell stack, and may further include a first insulation and a second insulation having a length (L) and a height (H) on the side and bottom surfaces of the cell stack.

The first side frame and the second side frame may have the adhesive injection port, the first inclined portion and the second inclined portion, and the first inductive gap portion and the second inductive gap portion on at least one side in the second direction.

The first side frame and the second side frame may include a flange that is formed to be long along the first direction at the outer edge of the second direction and is mounted on a vehicle.

The first bottom and the second bottom may form refrigerant passages, and the refrigerant passages may be connected to each other at both ends in the first direction, and may be connected to a refrigerant inlet and a refrigerant outlet provided at both ends of the second direction at one end of the first direction.

At least some of the above and other features of the invention are set out in the claims.

The rechargeable battery pack of embodiments is equipped with a cell stack that stacks a plurality of battery cells in a first direction with a center frame, first and second side frames, and first and second end frames, so that pack energy density may be maximized or at least increased.

According to embodiments, the center frame, first and second side frames may correspond to various sizes of the cell stack depending on the length in the first direction. Additionally, because embodiments include a pressurizing body in the cell stack, the cell stack may be pressed in the first direction.

BRIEF DESCRIPTION OF THE DRAWINGS

FIG. 1 is a perspective view of a rechargeable battery pack according to embodiments of the present disclosure.
FIG. 2 is a perspective view of a pack frame of the embodiment of the rechargeable battery pack illustrated in FIG. 1.
FIG. 3 is an exploded perspective view of the pack frame of FIG. 2.
FIG. 4 is a perspective view of a cell stack of the embodiment of the rechargeable battery pack illustrated in FIG. 1 in which battery cells are stacked.
FIG. 5 is a cross-sectional view taken along line V-V of FIG. 4.
FIG. 6 is a partial top plan view of the rechargeable battery pack of FIG. 1.
FIG. 7 is a cross-sectional view taken along line VII-VII of FIG. 6.
FIG. 8 is a top plan view of the pressurizing body applied to FIG. 6.
FIG. 9 is a first top plan view of the inner side in contact with the cell stack of the pressurizing body of FIG. 8.
FIG. 10 is a second top plan view of the outer side of the pressurizing body of FIG. 8 in contact with the pack frame.
FIG. 11 is a cross-sectional view taken along line XI-XI of FIG. 6.
FIG. 12 is a partial cross-sectional view of a pack cover assembled to the rechargeable battery pack of FIG. 1.
FIG. 13 is a cross-sectional view taken along line XIII - XIII of FIG. 12.

DETAILED DESCRIPTION OF THE EMBODIMENTS

Hereinafter, the present invention will be described more fully hereinafter with reference to the accompanying drawings, in which embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

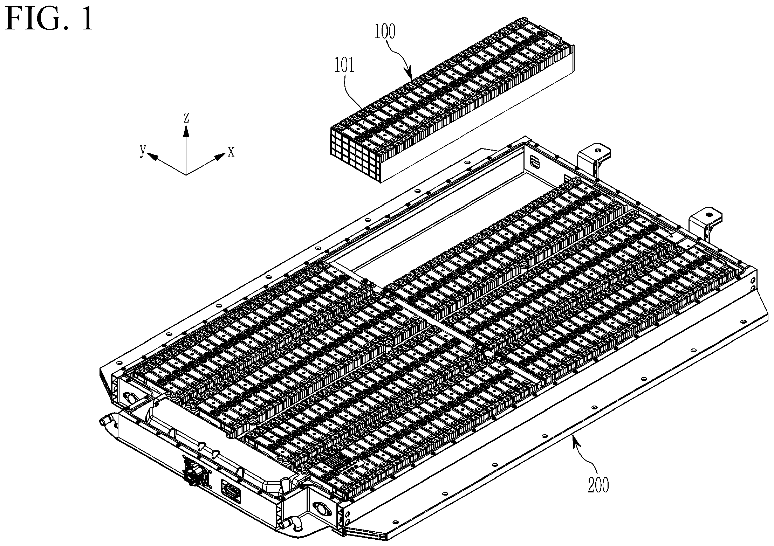

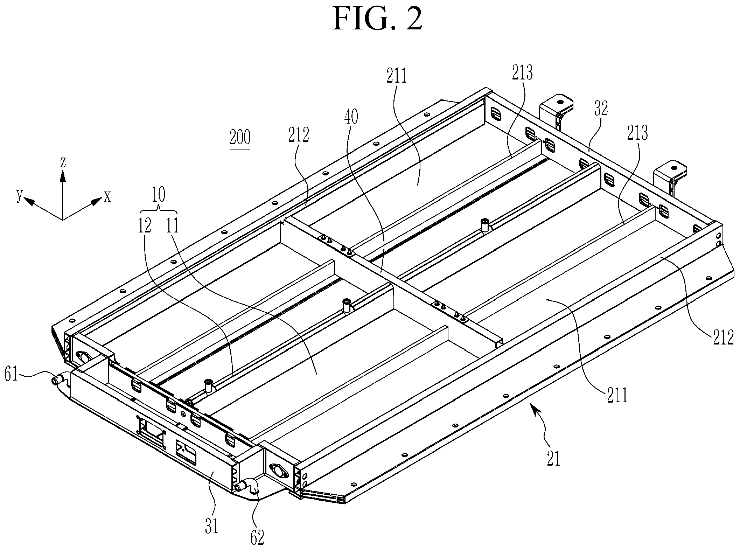

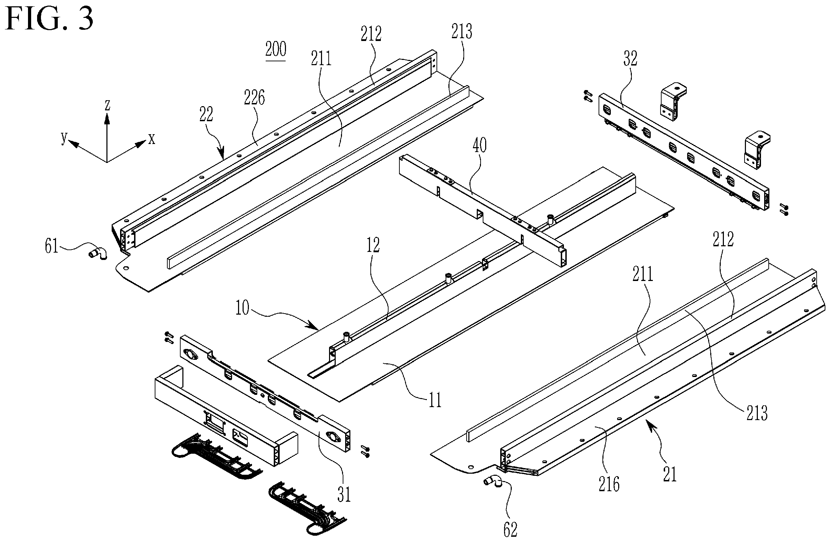

FIG. 1 is a perspective view of a rechargeable battery pack according to embodiments of the present disclosure, FIG. 2 is a perspective view of a pack frame of the embodiment illustrated in FIG. 1, and FIG. 3 is an exploded perspective view of the pack frame of FIG. 2.

Referring to FIGS. 1 to 3, a rechargeable battery pack according to embodiments of the present disclosure includes a plurality of cell stacks 100 and a pack frame 200 on which the cell stacks 100 are mounted. The pack frame 200 includes a center frame 10, a first side frame 21, a second side frame 22, and a first end frame 31 and a second end frame 32.

In an embodiment in which the pack frame 200 is configured to extend lengthwise in the first direction (x-axis direction), the pack frame 200 may further include a lateral or cross center frame 40. The lateral center frame 40 is coupled to the center frame 10 and the first and second side frames 21 and 22 in an intermediate portion (e.g., the middle or substantially the middle) of the center frame 10 in the first direction (x-axis direction) to support the different cell stacks 100 on both sides of the lateral center frame 10 in the first direction (x-axis direction).

The sizes (lengths) of the center frame 10 and the first and second side frames 21 and 22 may correspond to the size (length) of the cell stack 100 in the first direction (x-axis direction). That is, the center frame 10 and the first and second side frames 21 and 22 may be cut to an appropriate length depending on the length of the cell stack 100 in the first direction (x-axis direction).

In the pack frame 200, the center frame 10, the first side frame 21, and the second side frame 22 form an assembly space for the cell stack 100.

The cross-sectional shape and the length of the center frame 10, and the first and second side frames 21 and 22 may be selected depending on the various energy requirements of electric vehicles that utilize the cell stacks 100.

The center frame 10 includes a first bottom 11 and a first side wall 12 configured to support the cell stack 100. The first side wall 12 has a height extending upward in the third direction (z-axis direction) from the center (or substantially the center) of the first bottom 11 in the second direction (y-axis direction) and extends lengthwise in the first direction (x-axis direction). Accordingly, the center frame 10 is formed at both sides in the second direction (y-axis direction) with an open first bottom 11 without side walls.

The first side frame 21 and the second side frame 22 are each coupled to the center frame 10 in the second direction (y-axis direction) crossing the first direction (x-axis direction), and each have a second bottom 211 and second side walls 212 and 213 to support a cell narrow side (xz plane) of the cell stacks 100.

The first end frame 31 and the second end frame 32 are coupled to both ends (i.e., opposite ends) of the center frame 10 and the first and second side frames 21 and 22 in the first direction (x-axis direction) to support a cell wide side (yz plane) of the cell stacks 100.

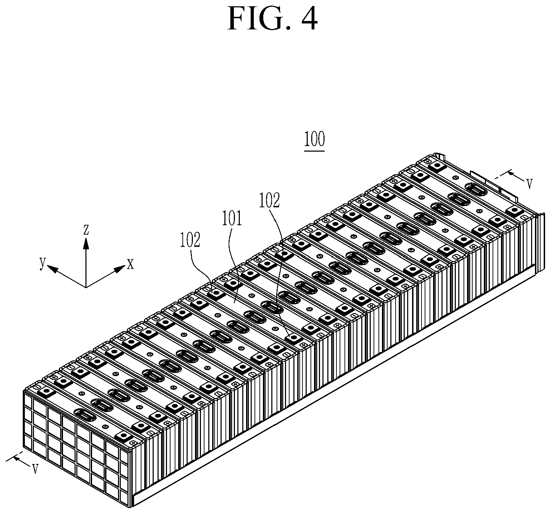

FIG. 4 is a perspective view of a cell stack 100 in which battery cells 101 are stacked. Referring to FIGS. 1 and 4, the cell stack 100 is formed by stacking a plurality of battery cells 101 in the first direction (x-axis direction).

Before being mounted on the pack frame 200, the cell stack 100 is in an uncompressed state. Each of the battery cells 101 is a square rechargeable battery, has the wide cell side (yz plane) and the narrow cell side (xz plane), and includes electrode terminals 102 and 103 at the top.

In the battery cell 101, the cell wide side (yz plane) faces both sides of the first direction (x-axis direction). The cell narrow side (xz plane) faces both sides of the second direction (y-axis direction) orthogonal to the first direction (x-axis direction). The electrode terminals 102 and 103 face upward in the third direction (z-axis direction) orthogonal to the first and second directions (x- and y-axis directions).

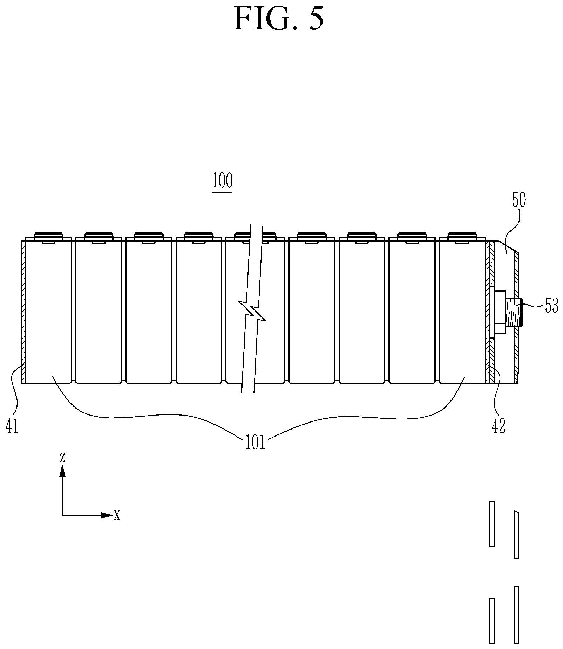

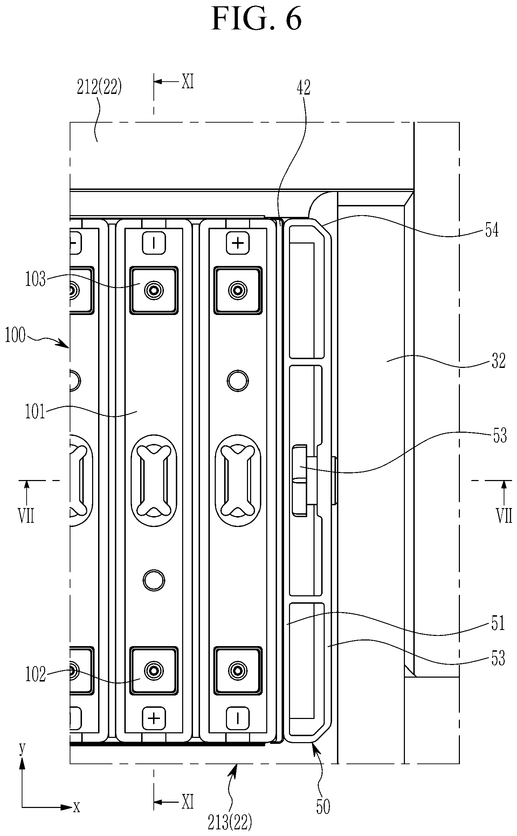

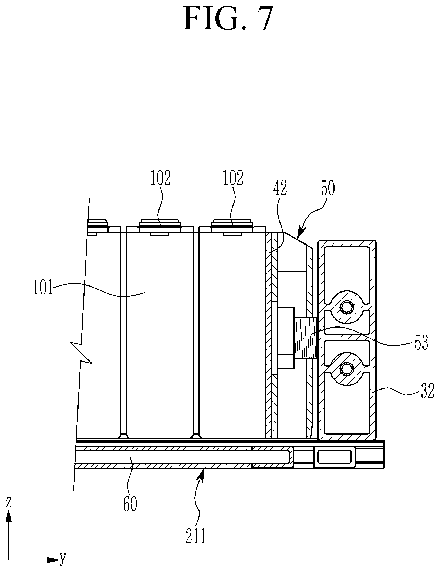

FIG. 5 is a cross-sectional view taken along line V-V of FIG. 4, FIG. 6 is a partial top plan view of the rechargeable battery pack of FIG. 1, and FIG. 7 is a cross-sectional view taken along line VII-VII of FIG. 6.

Referring to FIGS. 4 to 7, the cell stack 100 includes insulating members 41 and 42 and a pressurizing body 50. The insulating members 41 and 42 are provided at both ends (i.e., opposite ends) of the cell stack 100 in the first direction and are provided on the cell wide side (yz plane) of the outermost battery cells 101 in the first direction (x-axis direction). The pressurizing body 50 is located outside the insulating members 41 and 42 at at least one of both ends of the cell stack 100 in the first direction, and presses (compresses) battery cells 101 of the cell stack 100 together in the first direction.

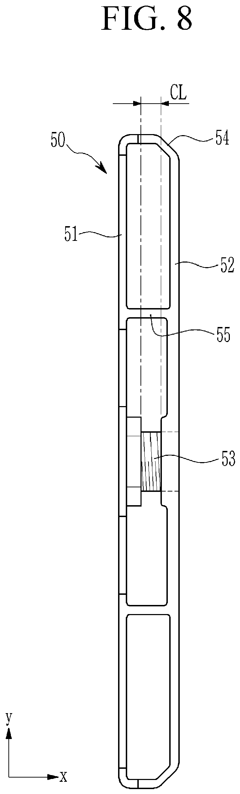

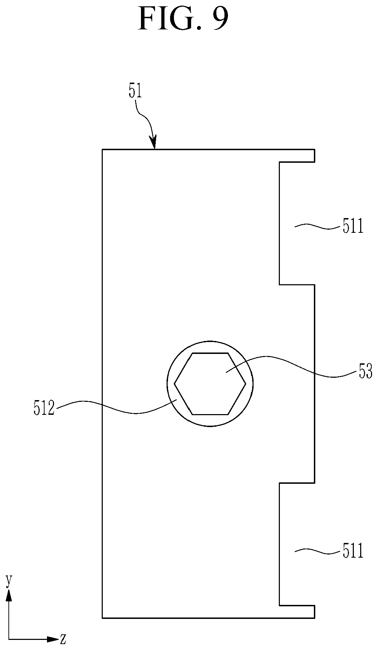

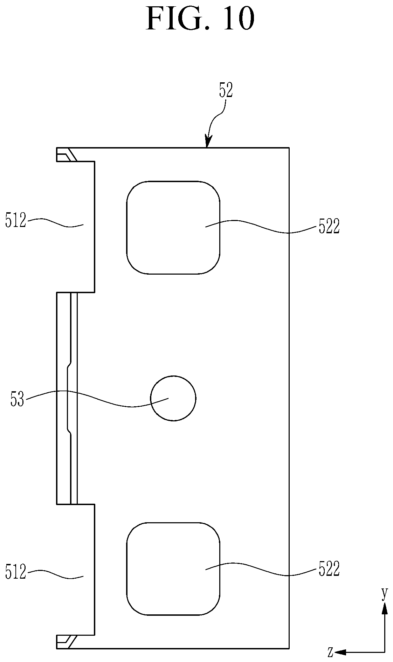

FIG. 8 is a top plan view of the pressurizing body 50 applied to FIG. 6, FIG. 9 is a first end view of the inner side of the pressurizing body 50 in contact with the cell stack of FIG. 8, and FIG. 10 is a second end view of the outer side of the pressurizing body 50 of FIG. 8 in contact with the pack frame 200.

Referring to FIGS. 6 to 10, the pressurizing body 50 includes a first plane portion 51 on the side of the cell stack 100, a second plane portion 52 spaced apart by a gap from the first plane portion 51, and a compressing force generator 53.

The compressing force generator 53 is supported on the end frame 32 by screwing the compressing force generator 53 into the second plane portion 52 so that the first plane portion 51 presses the cell stack 100. In one or more embodiments, the compressing force generator 53 is a bolt.

The bolt head of the compressing force generator 53 is between the first and second plane portions 51 and 52 and is rotationally adjustable. The end of the compressing force generator 53 that is screwed into the second plane portion 52 is supported on the end frame 32. As the amount of protrusion of the end of the compressing force generator 53 toward the second plane portion 52 increases, the first plane portion 51 applies more compressing force to the cell stack 100.

In one or more embodiments, the cell stack assembly space is larger than the dimensions of the cell stack 100, and the cell stack 100 is assembled in the cell stack assembly space in an uncompressed state. The pressurizing body 50 configured to compress the cell stack 100 is located on at least one side of the cell stack 100 in the first direction.

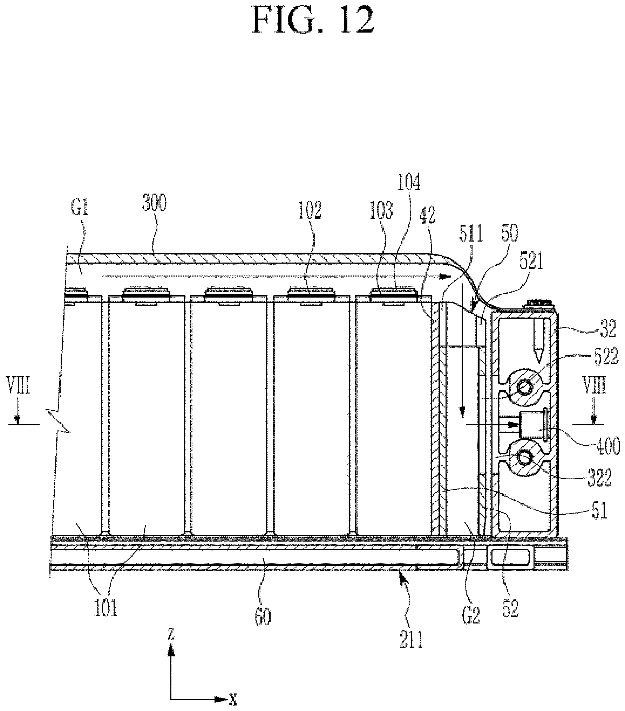

In response to the compressing force generator 53 being rotated, the pressurizing body 50 moves in a direction opposite to that of the compressing force generator 53 and compresses the cell stack 100. Compressing the cell stack 100 adjusts the overall dimensions of the cell stack 100 in the first direction and enables the welding of a bus bar 104 (see FIG. 12) to the cell stack 100.

Compressing the cell stack 100 is performed by rotating the compressing force generator 53 of the pressurizing body 50 after the cell stack 100 is assembled to the pack frame 200. After assembly and compressing all cell stacks 100 are completed, the bus bars 104 are laser welded to the electrode terminals 102 and 103 of the battery cells 101.

In an event in which a laser welding defect occurs, the compressing force generator 53 of the defective cell stack 100 may be released so that only the corresponding cell stack 100 may be reworked (e.g., the laser welding may be reperformed). Accordingly, the rechargeable battery pack of embodiments allows the cell stack 100 to be reworked when a defect occurs during the process.

Rotating the compressing force generator 53 causes the pressurizing body 50 to compress the battery cells 100. The compressing force may be adjusted in various ways by adjusting the bolt exterior diameter, material, and torque value of the compressing force generator 53.

The relationship between the torque applied to the compressing force generator 53 (e.g., the bolt), and the axial force of the compressing force generator 53 may be calculated as shown in Equation 1.

### (Equation 1)

$$F = T/Kd(1-L/100)$$

In Equation 1, F is the axial bolt force (compressing force) (N), T is the wrench torque (Nm), K is a constant that varies depending on the material and size, d is the nominal bolt diameter (m), and L is the lubrication coefficient (%).

In an embodiment in which T=10Nm, K=0.2 (zinc plated), d=0.02m ($\varnothing$20mm), and L=0%, the compressing force is approximately 2500N. The compressing force may be applied to the cell stack 100 by applying various variable values of the compressing force generator (e.g., bolt).

In one or more embodiments, the position of the compressing force generator 53 with respect to the pressurizing body 50 may be specified. In the pressurizing body 50, the first plane portion 51 is formed with an area corresponding to the cell wide side (yz plane) of the cell stack 100. In one or more embodiments, the second plane portion 52 has a smaller area than the first plane portion 51.

The pressurizing body 50 further includes an inclined surface portion 54 connecting the first plane portion 51 and the second plane portion 52 in a direction inclined with respect to the first direction (x-axis direction). The pressurizing body 50 further includes a rib 55 connecting the first plane portion 51 and the second plane portion 52 in the first direction (x-axis direction). The inclined surface portion 54 and the rib 55 strengthen the mechanical strength of the pressurizing body 50 and prevent (or at least mitigate) deformation when the compressing force is transmitted from the second plane portion 52 to the first plane portion 51.

In addition, the first plane portion 51 and the second plane portion 52 include recess portions 511 and 521 (e.g., notches), respectively, that are partially cut at the portion where the electrode terminals 102 and 103 of the battery cell 101 are located. The recess portions 511 and 521 prevent or at least reduce strong compressing forces from being applied to the electrode terminals 102 and 103, which are structurally more complex and vulnerable portions of the battery cell 101 than the portion including an electrode assembly (not shown).

In addition, the first plane portion 51 has a first vent hole 512, and the second plane portion 52 has second vent holes 522 on both sides of the compressing force generator 53 and connected to the first vent hole 512.

The position of the compressing force generator 53 is at the center (or approximately the center) of the first and second plane portions 51 and 52 of the pressurizing body 50 to apply a uniform (or approximately uniform) compressing force and does not protrude above the contact surface of the cell stack 100.

A compressible distance CL of the compressing force generator 53 is the distance between the lower end of the bolt head and the inner surface of the second plane portion 52. In one or more embodiments in which the maximum compression requirement is 7 mm, it may be designed as follows.

Wrench work is possible at a gap G2 set between the first and second flat portions 51 and 52 at the upper center portion of the pressurizing body 50. In order to prevent (or at least mitigate) stress from concentrating on the second plane portion 52 and to apply uniform (or approximately uniform) compressing force, the bolt diameter may be made as large as possible within a range that does not cause issues with assembly.

Once the assembly of the cell stack 100 on the pack frame 10 and the laser welding of the bus bar 104 are completed, additional fixation of the cell stack 100 may be performed. If the cell stack 100 is not completely fixed, the battery cell 101 may move during cell swelling, vibration, or impact, which may cause a fire or explosion. In one or more embodiments, after the cell stack 100 is assembled, side bonding is applied to both sides of the cell stack 100 in the second direction (x-axis direction).

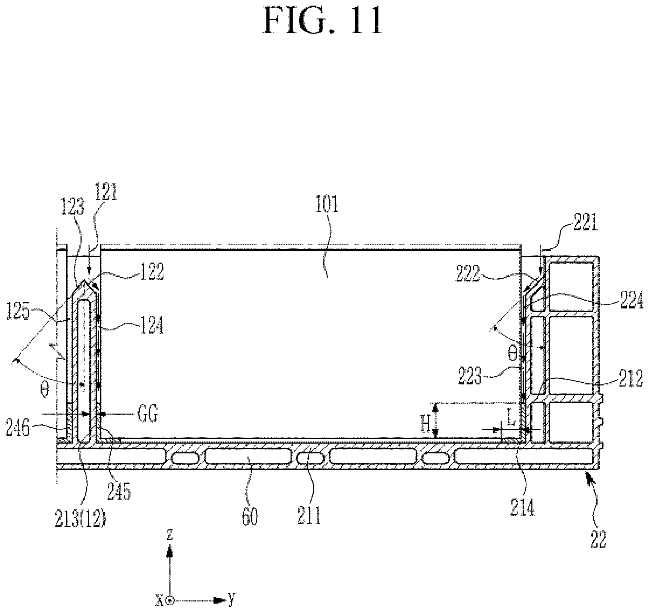

FIG. 11 is a cross-sectional view taken along line XI-XI of FIG. 6. Referring to FIG. 11, the first and second side frames 21 and 22 each include an adhesive injection port 221, an inclined portion 222, and a gap portion 223 on the second side walls 212 and 213 for side bonding.

The adhesive injection port 221 is provided at the top in the third direction (z-axis direction) to enable injection of adhesive. The inclined portion 222 is connected to the adhesive injection port 221 and is inclined inward in the second direction (y-axis direction). The inclined portion 222 is configured to allow the injected adhesive to flow downward.

The gap portion 223 is connected to the inclined portion 222 to form a gap that induces or guides the adhesive to flow downward from the cell narrow side (xz plane) of the battery cells 101 and the cell bottom (xy plane) of the battery cells 101. The gap portion 223 is filled with adhesive 224 at the cell bottom (xy plane) and the cell narrow side (xz plane) adjacent to the cell bottom.

The filled adhesive 224 has a length (L) set at the cell bottom (xy plane) and a height (H) set at the cell narrow side (xz plane). The adhesive 224 attaches the battery cells 101 of the cell stack 100 to the first and second side frames 21 and 22.

An L-shaped insulation 214 with a length (L) and height (H) may be applied to the side and bottom surfaces of the cell stack 100 to form a space for adhesive to flow between the cell stack 100 and the second side walls 212 and 213, and between the cell stack 100 and the second bottom 211.

In this manner, the cell stack 100 is prevented from being assembled eccentrically (i.e., crooked) between the second side walls 212 and 213, and a minimum space equal to the thickness of the insulation 214 may be achieved. The adhesive flows down and is absorbed into the insulation 214. In one or more embodiments, the adhesive has a viscosity capable of providing adhesion with the insulation 214.

The side bonding of the cell stack 100 may be achieved. An inclination angle θ of the inclined portion 222 for applying the adhesive may be adjusted depending on the viscosity of the adhesive. In one or more embodiments, the inclination angle θ may be larger for a relatively low-viscosity adhesive, and the inclination angle θ may be smaller for a relatively high-viscosity adhesive.

A gap GG between the battery cell 101 and the second side walls 212 and 213 for adhesive application may be adjusted depending on the viscosity of the adhesive, and may be adjusted by adjusting the length (L) and height (H) of the insulation 214. That is, the gap GG may be larger for a relatively high-viscosity adhesive, and the gap GG may be smaller for a relatively low-viscosity adhesive.

In one or more embodiments in which the adhesive has a viscosity of 5000 cps, the inclination angle θ may be in a range from approximately 40° to approximately 50°, and the gap GG may be in a range from approximately 1.0 mm to approximately 2.0 mm. In one or more embodiments, the inclination angle θ may be approximately 45° and the gap GG may be approximately 1.5 mm.

In an embodiment in which the adhesive has a viscosity of approximately 10000 cps, the inclination angle θ may be in a range from approximately 25° to approximately 35°, and the gap GG may be in a range from approximately 2.0 mm to approximately 3.0 mm. In one or more embodiments, the inclination angle θ may be approximately 30° and the gap GG may be approximately 2.5 mm.

The first and second side frames 21 and 22 may have the adhesive injection port 221, the inclined portion 222, and the inductive gap portion 223 on one of the second side walls 212 and 213 in the second direction (y-axis direction). In the illustrated embodiment, the adhesive injection port 221, the inclined portion 222, and the gap portion 223 may be provided on each of the second side walls 212 and 213 in the second direction (y-axis direction) to provide a stronger adhesion with the battery cells 101.

Referring to FIG. 11, the center frame 10 may include an adhesive injection port 121, an inclined portion 122, and a gap portion 124 on the first side wall 12.

Because the first side wall 12 of the center frame 10 corresponds to the second side wall 213 of the first and second side frames 21 and 22, a separate illustration of the first side wall 12 of the center frame 10 will be omitted, and will be described by the adhesive injection port 121, the first inclined portion 122 and the second inclined portion 123, and the first gap portion 124 and a second gap portion 125 provided in the second side wall 213 of the first and second side frames 21 and 22 of FIG. 11.

The adhesive injection port 121 is provided at the top in the third direction (z-axis direction) to enable injection of adhesive. The first inclined portion 122 and the second inclined portion 123 are connected to the adhesive injection port 121 and are formed to be inclined inward and outward in the second direction, respectively.

The first gap portion 124 and the second gap portion 125 are connected to the first inclined portion 122 and the second inclined portion 123, respectively, and induce or guide the flow of the adhesive to each cell narrow side (xz plane) of the battery cells 101 on both sides of the first side wall 12 of the center frame 10 in the second direction. The first gap portion 124 and the second gap portion 125 are filled (or substantially filled) with the adhesive 224 at the cell bottom (xy plane) and the cell narrow side (xz plane) of the battery cells 101 adjacent to the cell bottom.

The first and second side frames 21 and 22 include the adhesive injection port 121, the first inclined portion 122 and the second inclined portion 123, and the first gap portion 124 and the second gap portion 125 on the second side wall 213.

In the first and second side frames 21 and 22, the first gap portion 124 and the second gap portion 125 are filled (or substantially filled) with the adhesive 224 at the cell bottom (xy plane) and the cell narrow side (xz plane) of the battery cells 101 adjacent to the cell bottom.

A first insulation 245 and a second insulation 246 are located between the inside of the side wall 12 and the cell stack 100 in the second direction and between the outside of the side wall 12 and the cell stack 100 in the second direction, respectively. The first insulation 245 and the second insulation 246 each have an L-shaped cross-section with the length (L) and the height (H) of the first and second insulations 245, 246 on the side and bottom surfaces of the cell stack 100 to provide a space for the adhesive to flow.

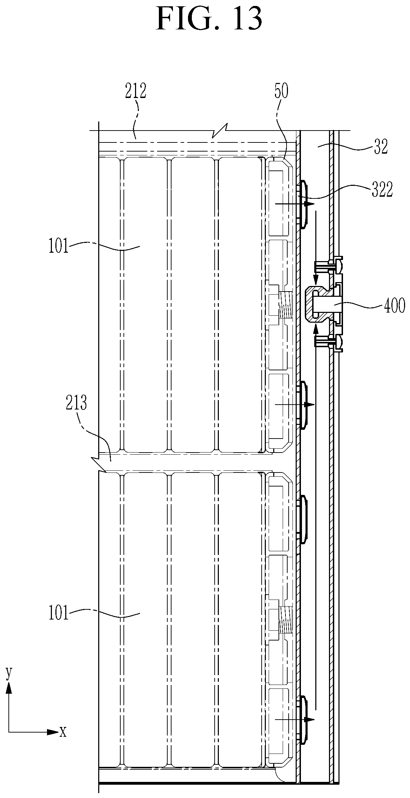

FIG. 12 is a partial cross-sectional view of a pack cover 300 assembled to the rechargeable battery pack of FIG. 1, and FIG. 13 is a cross-sectional view taken along line XIII - XIII of FIG. 12. Referring to FIGS. 12 and 13, the rechargeable battery pack according to embodiments of the present disclosure further include a pack cover 300 mounted on the first and second side frames 21 and 22 and on the first and second end frames 31 and 32.

The pack cover 300 covers the bus bar 104 that electrically connects the electrode terminals 102 and 103 of the battery cells 101 together. In one or more embodiments, at least one of the first and second end frames 31 and 32 includes a pack vent 400 connected to a second vent hole 522.

The gap G1 between the busbar 104 and the pack cover 300 is connected to (in fluid communication with) the gap G2 set between the first plane portion 51 of the pressurizing body 50 and the first plane portion 51. These gaps G1 and G2, together with the recess portions 511 and 521 and the first and second vent holes 512 and 522, enable the discharge of gas generated from the battery cells 101 during an event. This gas may be safely discharged to the outside of the rechargeable battery pack through the pack vent 400 provided in the second end frame 32 via the third vent hole 322 in the second end frame 32.

Referring again to FIG. 3, the first and second side frames 21 and 22 further include flanges 216 and 226, respectively, extending lengthwise along the first direction (x-axis direction) and extending outward in the second direction (y-axis direction). The flanges 216 and 226 are configured to be mounted on the vehicle.

In addition, the first bottom 11 of the center frame 10 and the second bottom 211 of each of the first and second side frames 21 and 22 form a plurality of refrigerant passages 60 (see FIGS. 11 and 12). A refrigerant circulating through the refrigerant passages 60 is configured to cool the battery cells 101. The refrigerant passages 60 are connected to each other at both ends in the first direction, and are connected to a refrigerant inlet 61 and a refrigerant outlet 62 provided at one end of the rechargeable battery pack in the first direction and spaced apart from each other along the second direction.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

<Description of symbols>

| | | | |
|---|---|---|---|
| 10: | Center frame | 11: | First bottom |
| 12: | First side wall | 21: | First side frame |
| 22: | Second side frame | 31: | First end frame |
| 32: | Second end frame | 40: | Cross center frame |
| 41, 42: | Insulating member | 50: | Pressurizing body |
| 51: | First plane portion | 52: | Second plane portion |
| 53: | Compressing force generator | 54: | Inclined surface portion |
| 55: | Rib | 60: | Refrigerant passage |
| 61: | Refrigerant inlet | 62: | Refrigerant outlet |
| 100: | Cell stack | 101: | Battery cell |
| 102, 103: | Electrode terminal | 104: | Bus bar |
| 121: | Adhesive injection port | 122: | Inclined portion |

(continued)

| 123: | Inductive gap portion | 124: | First inductive gap portion |
|---|---|---|---|
| 125: | Second inductive gap portion | 200: | Pack frame |
| 211: | Second bottom | 212, 213: | Second side wall |
| 214: | Insulation | 216, 226: | Flange |
| 221: | Adhesive injection port | 222: | Inclined portion |
| 223: | Inductive gap portion | 224: | Adhesive |
| 245: | First insulation | 246: | Second insulation |
| 300: | Pack Cover | 400: | Pack Vent |
| 511, 521: | Recess portion 5 | 12: | First vent hole |
| 522, 322: | Second, third vent hole | G1: | gap |
| G2: | Gap | GG: | Gap |
| H: | Height | L: | Length |
| θ: | Tilt angle | | |

The present invention will now be defined with reference to the following clauses.

Clause 1. A rechargeable battery pack, comprising:

a cell stack in which a plurality of battery cells are stacked in a first direction;
a center frame having a first bottom and a first side wall and supporting the cell stack;
a first side frame and a second side frame having a second bottom and a second side wall and coupled to the center frame in a second direction crossing the first direction and supporting a cell narrow side of the cell stack; and
a first end frame and a second end frame coupled to both ends of the center frame, the first side frame, and the second side frame in the first direction to support a cell wide side of the cell stack.

Clause 2. The rechargeable battery pack according to clause 1, further comprising: a cross center frame coupled to the center frame, the first side frame, and the second side frame in the middle of the first direction to support the cell wide sides of the different cell stacks on both sides of the first direction.

Clause 3. The rechargeable battery pack according to clause 1 or clause 2, wherein the center frame, the first side frame, and the second side frame correspond to various sizes of the cell stack depending on the length in the first direction.

Clause 4. The rechargeable battery pack according to any one of clauses 1 to 3, wherein the cell stack comprises insulating members provided at both ends of the first direction; and a pressurizing body disposed outside the insulating member at at least one side of both ends in the first direction.

Clause 5. The rechargeable battery pack according to clause 4, wherein the pressurizing body comprises a first plane portion disposed on the cell stack side; a second plane portion formed integrally with the first plane portion to form a gap; and a compressing force generator supported on the end frame by screwing the second plane portion and causing the first plane portion to press the cell stack.

Clause 6. The rechargeable battery pack according to clause 4 or clause 5, wherein the first plane portion is formed with an area corresponding to the cell wide side of the cell stack, the second plane portion is formed to have a smaller area than the first plane portion, and the pressurizing body further comprises an inclined surface portion connecting the first plane portion and the second plane portion in a direction inclined to the first direction.

Clause 7. The rechargeable battery pack according to clause 6, wherein the pressurizing body further comprises a rib connecting the first plane portion and the second plane portion in the first direction.

Clause 8. The rechargeable battery pack according to clause 6 or clause 7, wherein the first plane portion and the second plane portion have a partially cut recess portion at a portion where the electrode terminals of the battery cell are disposed.

Clause 9. The rechargeable battery pack according to any one of clauses 6 to 8, wherein the first plane portion has a first vent hole, the second plane portion has second vent holes penetrating on both sides of the compressing force generator and connected to the first vent hole.

Clause 10. The rechargeable battery pack as according to any one of clauses 6 to 9, further comprising: a pack cover mounted on the first side frame, the second side frame, the first end frame and the second end frame, wherein at least one of the first end frame and the second end frame has a pack vent connected to the second vent hole.

Clause 11. The rechargeable battery pack according to any one of clauses 1 to 10, wherein the first side frame and the second side frame have an adhesive injection port provided at the top of the third direction; an inclined portion connected to the adhesive injection port and inclined inward in the second direction; and an inductive gap portion connected to the inclined portion to form a gap that guides adhesive to the cell narrow side and a cell bottom of the battery cell, and the inductive gap is filled with an adhesive.

Clause 12. The rechargeable battery pack according to clause 11, wherein the rechargeable battery pack is provided between the second side wall and the cell stack and further comprises an insulation of a length (L) and a height (H) on the side and bottom surfaces of the cell stack.

Clause 13. The rechargeable battery pack according to clause 11 or clause 12, wherein the first side frame and the second side frame have the adhesive injection port, the inclined portion, and the inductive gap portion on at least one side in the second direction.

Clause 14. The rechargeable battery pack according to any one of clauses 1 to 13, wherein the center frame comprises an adhesive injection port provided at the top of the third direction; a first inclined portion and a second inclined portion connected to the adhesive injection port and inclined respectively inward and outward in the second direction; and a first inductive gap portion and a second inductive gap portion respectively connected to the first inclined portion and the second inclined portion and respectively induce the adhesive to the cell narrow side of the battery cell disposed on both sides in the second direction, and the first inductive gap portion and the second inductive gap portion are filled with an adhesive.

Clause 15. The rechargeable battery pack according to clause 14, wherein the rechargeable battery pack is provided between the inner side of the side wall in the second direction and the cell stack and between the outer side of the side wall in the second direction and the cell stack, and further comprises a first insulation and a second insulation having a length (L) and a height (H) on the side and bottom surfaces of the cell stack.

Clause 16. The rechargeable battery pack according to clause 15, wherein the first side frame and the second side frame have the adhesive injection port, the first inclined portion and the second inclined portion, and the first inductive gap portion and the second inductive gap portion on at least one side in the second direction.

Clause 17. The rechargeable battery pack according to any one of clauses 1 to 16, wherein the first side frame and the second side frame comprise a flange that is formed to be long along the first direction at the outer edge of the second direction and is mounted on a vehicle.

Clause 18. The rechargeable battery pack according to any one of clauses 1 to 17, wherein the first bottom and the second bottom form a plurality of refrigerant passages, and the refrigerant passage is connected to each other at both ends in the first direction, and is connected to a refrigerant inlet and a refrigerant outlet provided at both ends of the second direction at one end of the first direction.

## Claims

1. A rechargeable battery pack, comprising:

   at least one cell stack comprising a plurality of battery cells stacked in a first direction;
   a center frame comprising a first bottom and a first side wall supporting the at least one cell stack;
   a first side frame and a second side frame each comprising a second bottom and a second side wall, the first side frame and the second side frame being coupled to the center frame in a second direction crossing the first direction and supporting a cell narrow side of the at least one cell stack; and

a first end frame and a second end frame coupled to both ends of the center frame, the first side frame, and the second side frame in the first direction to support a cell wide side of the at least one cell stack.

2. The rechargeable battery pack as claimed in claim 1, wherein the at least one cell stack comprises a plurality of cell stacks, and wherein the rechargeable battery pack further comprises a lateral center frame coupled to an intermediate portion of the center frame, the first side frame, and the second side frame in the first direction to support cell wide sides of a first cell stack and a second cell stack of the plurality of cell stacks on both sides of the lateral center frame in the first direction.

3. The rechargeable battery pack as claimed in claim 1 or claim 2, wherein the at least one cell stack comprises a first cell stack and a second cell stack arranged in the first direction, and wherein a length of each of the center frame, the first side frame, and the second side frame corresponds to a combined length of the first cell stack and the second cell stack in the first direction.

4. The rechargeable battery pack as claimed in any one of claims 1 to 3, further comprising:

insulating members at both ends of the at least one cell stack in the first direction; and
a pressurizing body outside the insulating members at at least one end of the both ends of the at least one cell stack in the first direction.

5. The rechargeable battery pack as claimed in claim 4, wherein
the pressurizing body comprises:

a first plane portion on the at least one end of the at least one cell stack;
a second plane portion spaced apart from the first plane portion by a gap; and
a compressing force generator supported on the first end frame or the second end frame,
wherein the compressing force generator is configured to screw into the second plane portion and cause the first plane portion to compress the at least one cell stack.

6. The rechargeable battery pack as claimed in claim 5, wherein the first plane portion has an area corresponding to the cell wide side of the at least one cell stack, wherein the second plane portion has an area smaller than the area of the first plane portion, and wherein the pressurizing body further comprises an inclined surface portion connecting the first plane portion and the second plane portion in a direction inclined to the first direction.

7. The rechargeable battery pack as claimed in claim 6, wherein
the pressurizing body further comprises a rib connecting the first plane portion and the second plane portion in the first direction.

8. The rechargeable battery pack as claimed in claim 6 or claim 7, wherein each of the plurality of battery cells comprises electrode terminals, and wherein the first plane portion and the second plane portion each comprise a notch at a portion where the electrode terminals are located.

9. The rechargeable battery pack as claimed in any one of claims 6 to 8, wherein:

the first plane portion comprises a first vent hole, and
the second plane portion comprises second vent holes on both sides of the compressing force generator and in communication with the first vent hole, optionally further comprising:
a pack cover on the first side frame, the second side frame, the first end frame, and the second end frame,
wherein at least one of the first end frame or the second end frame comprises a pack vent connected to the second vent holes.

10. The rechargeable battery pack as claimed in any one of claims 1 to 9, wherein the first side frame and the second side frame each comprise:

an adhesive injection port at a top of the first side frame or the second side frame in a third direction;
an inclined portion connected to the adhesive injection port and inclined inward in the second direction; and
a gap portion connected to the inclined portion to form a gap configured to guide adhesive to the cell narrow side and a cell bottom of the at least one cell stack, and

wherein the rechargeable battery pack further comprises an adhesive in the gap portion.

11. The rechargeable battery pack as claimed in claim 10, wherein:

(i) the rechargeable battery pack further comprises an insulation having a length (L) and a height (H) on side and bottom surfaces of the at least one cell stack; and/or
(ii) the first side frame and the second side frame each comprise the adhesive injection port, the inclined portion, and the gap portion on at least one side in the second direction.

12. The rechargeable battery pack as claimed in any one of claims 1 to 11, further comprising an adhesive and wherein the center frame comprises:

an adhesive injection port at a top of the center frame in a third direction;
a first inclined portion connected to the adhesive injection port and inclined inward in the second direction;
a second inclined portion connected to the adhesive injection port and inclined outward in the second direction; and
a first gap portion connected to the first inclined portion and a second gap portion connected to the second inclined portion, the first gap portion and the second gap portion being configured to guide the adhesive to the cell narrow side of the plurality of battery cells on both sides of the center frame in the second direction,
wherein the first gap portion and the second gap portion are substantially filled with the adhesive.

13. The rechargeable battery pack as claimed in claim 12, further comprising a first insulation and a second insulation each having a length (L) and a height (H) on side and bottom surfaces of the at least one cell stack, optionally wherein the first side frame and the second side frame each comprise the adhesive injection port, the first inclined portion and the second inclined portion, and the first gap portion and the second gap portion on at least one side in the second direction.

14. The rechargeable battery pack as claimed in any one of claims 1 to 13, wherein the first side frame and the second side frame each comprise a flange extending lengthwise along the first direction and extending outward in the second direction, and wherein the flange is configured to be mounted on a vehicle.

15. The rechargeable battery pack as claimed in any one of claims 1 to 14, wherein:

the first bottom and the second bottom each comprise a plurality of refrigerant passages,
the plurality of refrigerant passage is connected to each other in the first direction, and
the plurality of refrigerant passages is connected to a refrigerant inlet and a refrigerant outlet at one end in the first direction and at both ends in the second direction.

FIG. 1

# FIG. 2

EP 4 528 895 A1

FIG. 3

# FIG. 4

# FIG. 5

# FIG. 6

# FIG. 7

# FIG. 8

# FIG. 9

# FIG. 10

# FIG. 11

# FIG. 12

# FIG. 13

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | US 2023/155227 A1 (PUCHER MATTHIAS [AT]) 18 May 2023 (2023-05-18) | 1-3,14 | INV. H01M50/207 |
| A | * paragraphs [0095], [0141] - [0142]; figures * | 4-13,15 | H01M50/209 H01M50/211 |
| | - - - - - | | H01M50/249 |
| X | US 2023/006298 A1 (SCHÖNBERGER MICHAEL [DE] ET AL) 5 January 2023 (2023-01-05) | 1,3,14, 15 | H01M50/26 H01M50/291 |
| A | * paragraphs [0095], [0141] - [0142]; figures * | 2,4-13 | H01M50/35 |
| | - - - - - | | |

**TECHNICAL FIELDS SEARCHED (IPC)**

H01M

The present search report has been drawn up for all claims

| Place of search | Date of completion of the search | Examiner |
| --- | --- | --- |
| Munich | 14 January 2025 | Brisson, Olivier |

EPO FORM 1503 03.82 (P04C01)

**ANNEX TO THE EUROPEAN SEARCH REPORT
ON EUROPEAN PATENT APPLICATION NO.**

EP 24 18 6321

This annex lists the patent family members relating to the patent documents cited in  the above-mentioned European search report.
The members are as contained in the European Patent Office EDP file on
The European Patent Office is in no way liable for these particulars which are merely given for the purpose of information.

14-01-2025

| Patent document cited in search report | | | Publication date | Patent family member(s) | | | Publication date |
|---|---|---|---|---|---|---|---|
| US 2023155227 | A1 | | 18-05-2023 | CN | 116130869 | A | 16-05-2023 |
| | | | | CN | 219226503 | U | 20-06-2023 |
| | | | | US | 2023155227 | A1 | 18-05-2023 |
| US 2023006298 | A1 | | 05-01-2023 | CN | 114616715 | A | 10-06-2022 |
| | | | | EP | 4070404 | A1 | 12-10-2022 |
| | | | | US | 2023006298 | A1 | 05-01-2023 |
| | | | | WO | 2021110246 | A1 | 10-06-2021 |

EPO FORM P0459

For more details about this annex : see Official Journal of the European Patent Office, No. 12/82